# FASCICULE DE BREVET EUROPEEN

(11) **EP 3 246 214 B1**
(45) Date de publication et mention de la délivrance du brevet: **26.12.2018**
(21) Numéro de dépôt: 17171403.3
(22) Date de dépôt: 16.05.2017
(51) Int. Cl.: B60R 13/02, F16B 5/02, F16B 5/06

(54) **STRUCTURE INTÉRIEURE DE VÉHICULE ET PROCÉDÉ DE MONTAGE CORRESPONDANT**
INNENSTRUKTUR EINES FAHRZEUGS, UND ENTSPRECHENDES MONTAGEVERFAHREN
VEHICLE INTERNAL STRUCTURE AND CORRESPONDING ASSEMBLY PROCESS

(30) Priorité: 17.05.2016 FR 1654379
(43) Date de publication de la demande: 22.11.2017
(73) Titulaire: Faurecia Intérieur Industrie, 92000 Nanterre (FR)
(72) Inventeur: BENAT-AISSI, Philippe, 60880 Armancourt (FR); SOUTHON, Frédéric, 60175 Villeneuve les Sablons (FR); AMAND, Alexis, 60110 Meru (FR)
(74) Mandataire: Lavoix

(56) Documents cités:
- WO-A2-2007/069057
- DE-A1- 10 048 774
- DE-A1-102004 050 553
- DE-A1-102008 028 734
- DE-A1-102012 021 870

## Description

L'invention concerne en général le centrage de sous-ensembles d'une structure intérieure de véhicule.

Plus précisément, l'invention concerne selon un premier aspect une structure intérieure de véhicule, du type comprenant :
- une structure de référence ;
- des premier et second sous-ensembles ;
- un dispositif de centrage.

DE 100 48 774 décrit une structure intérieure de ce type, dans laquelle le dispositif de centrage comporte des premiers centreurs définissant la position d'une extrémité du premier sous-ensemble par rapport à la structure de référence. Le dispositif de centrage comporte également des seconds centreurs définissant la position de l'extrémité opposée du premier sous-ensemble par rapport à la structure de référence, avec un jeu possible suivant au moins une direction. Le second sous-ensemble est mis en référence directement sur le premier sous-ensemble.

Dans une telle structure intérieure, il n'est pas possible de démonter le premier sous-ensemble sans démonter au moins partiellement le second sous-ensemble.

Dans ce contexte, l'invention vise à proposer une structure intérieure permettant de garantir des tolérances de positionnement très réduites entre les premier et second sous-ensembles, et ne présentant pas le défaut ci-dessus.

A cette fin, l'invention porte sur une structure intérieure du type précité, caractérisée en ce que le dispositif de centrage comprend :
- un premier centreur lié à la structure de référence et un premier centreur complémentaire lié au premier sous-ensemble, le premier centreur et le premier centreur complémentaire coopérant l'un avec l'autre pour définir la position du premier sous-ensemble par rapport à la structure de référence selon au moins une première direction ;
- un centreur flottant lié à la structure de référence et un second centreur complémentaire lié au premier sous-ensemble, le centreur flottant étant déplaçable par rapport à la structure de référence selon la première direction, le centreur flottant et le second centreur complémentaire coopérant l'un avec l'autre pour définir la position du centreur flottant par rapport à la structure de référence selon au moins la première direction ; et
- un troisième centreur complémentaire lié au second sous-ensemble, le centreur flottant et le troisième centreur complémentaire coopérant l'un avec l'autre pour définir la position du second sous-ensemble par rapport au premier sous-ensemble selon au moins la première direction.

Le premier centreur et le premier centreur complémentaire permettent de définir la position du premier sous-ensemble par rapport à la structure de référence. La position du centreur flottant est ajustée automatiquement via le second centreur complémentaire, et s'adapte ainsi à la taille du premier sous-ensemble. Cette taille peut varier de manière significative, notamment si le premier sous-ensemble est venu d'injection. La position du second sous-ensemble par rapport au premier sous-ensemble est garantie automatiquement par le troisième centreur complémentaire, coopérant avec le centreur flottant. La position du second sous-ensemble suit donc le déplacement du centreur flottant. Ceci garantit une tolérance de montage extrêmement réduite entre les premier et second sous-ensembles. Il est possible de garantir ainsi une tolérance suivant la première direction de plus ou moins 0,5 mm, et même de plus ou moins 0,3 mm.

Par ailleurs, le second sous-ensemble n'est pas monté directement sur le premier sous-ensemble. Le premier sous-ensemble peut donc être démonté indépendamment du second sous-ensemble.

La structure intérieure peut présenter en outre une ou plusieurs des caractéristiques ci-dessous, considérées individuellement ou selon toutes les combinaisons techniquement possibles :
- la structure comprend un sous-ensemble intermédiaire, le dispositif de centrage comprenant un centreur intermédiaire lié à la structure de référence et un centreur complémentaire intermédiaire lié au sous-ensemble intermédiaire, le centreur intermédiaire et le centreur complémentaire intermédiaire coopérant l'un avec l'autre pour définir la position du sous-ensemble intermédiaire par rapport à la structure de référence selon au moins la première direction ;
- le premier centreur et le centreur intermédiaire sont disposés à proximité l'un de l'autre selon la première direction, de préférence à une distance inférieure à 10 mm ;
- la structure comprend un sous-ensemble latéral, le dispositif de centrage comprenant :
   - un centreur latéral secondaire lié à la structure de référence et un centreur complémentaire latéral secondaire lié au sous-ensemble latéral, le centreur latéral secondaire et le centreur complémentaire latéral secondaire coopérant l'un avec l'autre pour définir la position du sous-ensemble latéral par rapport à la structure de référence selon au moins la première direction avec un jeu ; et
   - un centreur latéral primaire lié au sous-ensemble latéral et un centreur complémentaire latéral primaire lié au sous-ensemble intermédiaire, le centreur latéral primaire et le centreur complémentaire latéral primaire coopérant l'un avec l'autre pour définir la position du sous-ensemble latéral par rapport au sous-ensemble intermédiaire selon au moins la première direction ;
- la structure comprend un autre sous-ensemble latéral, le dispositif de centrage comprenant :
   - un autre centreur latéral secondaire lié à la structure de référence et un autre centreur complémentaire latéral secondaire lié à l'autre sous-ensemble latéral, l'autre centreur latéral secondaire et l'autre centreur complémentaire latéral secondaire coopérant l'un avec l'autre pour définir la position de l'autre sous-ensemble latéral par rapport à la structure de référence selon au moins la première direction avec un jeu ; et
   - un autre centreur latéral primaire lié au deuxième sous-ensemble et un autre centreur complémentaire latéral primaire lié à l'autre sous-ensemble latéral, l'autre centreur latéral primaire et l'autre centreur complémentaire latéral primaire coopérant l'un avec l'autre pour définir la position de l'autre sous-ensemble latéral par rapport au second sous-ensemble selon au moins la première direction ;
- au moins le premier sous-ensemble est démontable sans démonter le second sous-ensemble ;
- le dispositif de centrage comprend :
   - un second centreur flottant lié à la structure de référence et un quatrième centreur complémentaire lié au premier sous-ensemble, le second centreur flottant étant déplaçable par rapport à la structure de référence selon la première direction, le second centreur flottant et le quatrième centreur complémentaire coopérant l'un avec l'autre pour définir la position du second centreur flottant par rapport à la structure de référence au moins selon la première direction ;
   - un cinquième centreur complémentaire lié au second sous-ensemble, le second centreur flottant et le cinquième centreur complémentaire coopérant l'un avec l'autre pour définir la position du second sous-ensemble par rapport au premier sous-ensemble seulement selon la première direction et laissant le second sous-ensemble libre par rapport au premier sous-ensemble selon une seconde direction ; et
   - le centreur flottant et le troisième centreur complémentaire coopérant l'un avec l'autre pour définir la position du second sous-ensemble par rapport au premier sous-ensemble selon la première direction et la seconde direction.
- au moins l'un des second et troisième centreurs complémentaires comprend au moins une première nervure s'étendant dans un premier plan perpendiculaire à la première direction, et une seconde nervure s'étendant entièrement d'un côté du premier plan.

Selon un second aspect, l'invention porte sur un procédé de montage d'une structure intérieure ayant les caractéristiques ci-dessus, le procédé comprenant les étapes suivantes :
- centrage du premier sous-ensemble par rapport à la structure de référence au moins selon la première direction, à l'aide du premier centreur et du premier centreur complémentaire ;
- positionnement du centreur flottant par rapport à la structure de référence selon au moins la première direction à l'aide du second centreur complémentaire ; et
- centrage du second sous-ensemble par rapport au premier sous-ensemble selon au moins la première direction à l'aide du troisième centreur complémentaire et du centreur flottant.

Le procédé peut en outre présenter une ou plusieurs des caractéristiques ci-dessous, considérées individuellement ou selon toutes les combinaisons techniquement possibles :
- le procédé comprend, avant les étapes de centrage du premier sous-ensemble, de positionnement du centreur flottant et de centrage du second sous-ensemble, une étape de centrage d'un sous-ensemble intermédiaire à l'aide d'un centreur intermédiaire lié à la structure de référence et d'un centreur complémentaire intermédiaire lié au sous-ensemble intermédiaire, le centreur intermédiaire et le centreur complémentaire intermédiaire coopérant l'un avec l'autre pour définir la position du sous-ensemble intermédiaire par rapport à la structure de référence selon au moins la première direction ;
- le procédé comprend, avant les étapes de centrage du premier sous-ensemble, de positionnement du centreur flottant, de centrage du second sous-ensemble et de centrage du sous-ensemble intermédiaire, une étape de centrage provisoire d'un sous-ensemble latéral à l'aide d'un centreur latéral secondaire lié à la structure de référence et d'un centreur complémentaire latéral secondaire lié au sous-ensemble latéral, le centreur latéral secondaire et le centreur complémentaire latéral secondaire coopérant l'un avec l'autre pour définir la position du sous-ensemble latéral par rapport à la structure de référence selon au moins la première direction avec un jeu ; et
- le procédé comprenant en outre une étape de centrage final du sous-ensemble latéral à l'aide d'un centreur latéral primaire lié au sous-ensemble latéral et un centreur complémentaire latéral primaire lié au sous-ensemble intermédiaire, le centreur latéral primaire et le centreur complémentaire latéral primaire coopérant l'un avec l'autre pour définir la position du sous-ensemble latéral par rapport au sous-ensemble intermédiaire selon au moins la première direction ;
- le procédé comprend, avant les étapes de centrage du premier sous-ensemble, de positionnement du centreur flottant, de centrage du second sous-ensemble, une étape de centrage provisoire d'un autre sous-ensemble latéral à l'aide d'un autre centreur latéral secondaire lié à la structure de référence et d'un autre centreur complémentaire latéral secondaire lié à l'autre sous-ensemble latéral, l'autre centreur latéral secondaire et l'autre centreur complémentaire latéral secondaire coopérant l'un avec l'autre pour définir la position de l'autre sous-ensemble latéral par rapport à la structure de référence selon au moins la première direction avec un jeu ; et
- le procédé comprenant en outre une étape de centrage final de l'autre sous-ensemble latéral à l'aide d'un autre centreur latéral primaire lié à l'autre sous-ensemble latéral et d'un autre centreur complémentaire latéral primaire lié au second sous-ensemble, l'autre centreur latéral primaire et l'autre centreur complémentaire latéral primaire coopérant l'un avec l'autre pour définir la position de l'autre sous-ensemble latéral par rapport au second sous-ensemble selon au moins la première direction (D1).

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 représente de manière schématique une structure intérieure de véhicule conforme à l'invention ;
- la figure 2 est une représentation agrandie du centreur flottant de la figure 1 ;
- la figure 3 est une vue en coupe prise selon l'incidence des flèches III de la figure 2;
- la figure 4 est une représentation schématique illustrant une variante de réalisation de l'invention ; et
- les figures 5 et 6 sont des vues similaires à celles des figures 2 et 3, pour une autre variante de réalisation de l'invention.

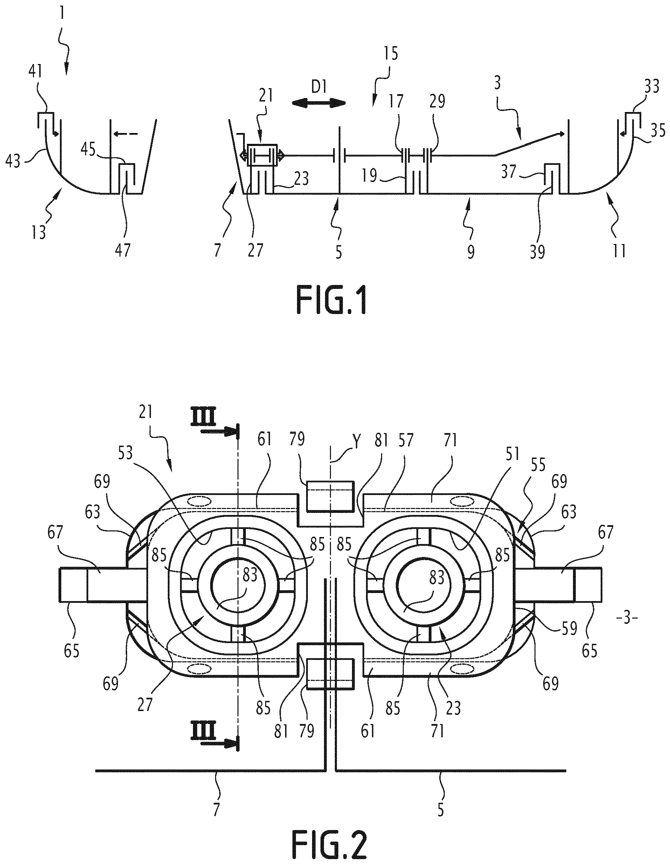

La structure intérieure 1 représentée sur la figure 1 est destinée à être implantée typiquement dans l'habitacle d'un véhicule. Ce véhicule est par exemple un véhicule automobile, typiquement une voiture ou un camion.

Dans la présente description, les directions longitudinale et transversale sont entendues ici relativement au sens de déplacement normal du véhicule.

Dans l'exemple représenté, la structure intérieure est une planche de bord. En variante, la structure intérieure est un garnissage d'ouvrant, une console centrale interposée entre les deux sièges avant du véhicule, ou toute autre structure de l'habitacle.

La structure intérieure comprend une structure de référence 3, plusieurs sous-ensembles 5, 7, 9, 11, 13 et un dispositif de centrage 15. Le dispositif de centrage 15 est prévu pour la mise en position -c'est-à-dire le centrage- des différents sous-ensembles 5, 7, 9, 11, 13 les uns par rapport aux autres, avec des tolérances de position réduites. Le dispositif de centrage 15 est prévu notamment pour la mise en position des différents sous-ensembles les uns par rapport aux autres suivant une première direction D1, matérialisée sur la figure 1.

Quand la structure intérieure est une planche de bord, la première direction D1 est typiquement la direction transversale.

Dans ce cas, la structure de référence est par exemple la structure rigide de la planche de bord, qui comporte typiquement au moins une traverse transversale et une coiffe rapportée sur cette traverse. Les différents sous-ensembles sont des pièces de garnissage couvrant la structure. Typiquement, les sous-ensembles sont visibles pour les passagers du véhicule.

La structure intérieure comprend au moins des premier et second sous-ensembles 5, 7. Dans le cas d'une planche de bord, ces sous-ensembles correspondent par exemple respectivement à la pièce de garnissage centrale portant les commandes de climatisation, de radio et l'aérateur central, et à une pièce de garnissage encadrant les différents cadrans et compteurs placés en face du conducteur du véhicule.

Typiquement, la structure intérieure 1 comporte encore un sous-ensemble intermédiaire 9, et/ou un sous-ensemble latéral 11, et/ou un autre sous-ensemble latéral 13.

Dans le cas d'une planche de bord, le sous-ensemble intermédiaire 9 est une pièce de garnissage dans lequel est réalisé le couvercle de l'airbag passager, le sous-ensemble latéral et l'autre sous-ensemble latéral étant par exemple des pièces de garnissage portant les aérateurs latéraux de la planche de bord.

Le dispositif de centrage 15 comprend, comme visible sur la figure 1, un premier centreur 17 lié à la structure de référence 3, et un premier centreur complémentaire 19 lié au premier sous-ensemble 5.

Le premier centreur 17 et le premier centreur complémentaire 19 coopèrent l'un avec l'autre pour définir la position du premier sous-ensemble 5 par rapport à la structure de référence 3 selon au moins la première direction D1.

Par ailleurs, le dispositif de centrage 15 comprend un centreur flottant 21 lié à la structure de référence 3, et un second centreur complémentaire 23 lié au premier sous-ensemble 5. Le centreur flottant 21 est déplaçable par rapport à la structure de référence 3 selon la première direction D1. Le centreur flottant 21 et le second centreur complémentaire 23 coopèrent l'un avec l'autre pour définir la position du centreur flottant 21 par rapport à la structure de référence 3 selon au moins la première direction D1.

Typiquement, le premier centreur complémentaire 19 et le second centreur complémentaire 23 sont solidaires de deux extrémités du premier sous-ensemble 5 opposées l'une à l'autre selon la première direction D1.

Le premier centreur 17 et le premier centreur complémentaire 19 fixent la position de l'extrémité correspondante du premier sous-ensemble 5 sans jeu par rapport à la structure de référence 3. Notamment quand le premier sous-ensemble 5 est fabriqué par injection, il existe une tolérance significative sur la longueur du premier sous-ensemble 5 selon la première direction D1. Ceci se traduit par un déplacement du centreur flottant 21 suivant la première direction, fonction de la longueur réelle du premier sous-ensemble 5 suivant la première direction.

Le dispositif de centrage 15 comporte encore un troisième centreur complémentaire 25, lié au second sous-ensemble 7, le centreur flottant 21 et le troisième centreur 27 complémentaire coopérant l'un avec l'autre pour définir la position du second sous-ensemble 7 par rapport au premier sous-ensemble 5 selon au moins la première direction D1. Ainsi, le second sous-ensemble 7 suit le centreur flottant 21, et est donc toujours positionné correctement par rapport au premier sous-ensemble 5. Le centreur flottant 27 et le troisième centreur complémentaire 27 fixent la position du second sous-ensemble sans jeu.

Le dispositif de centrage 15 comprend avantageusement un centreur intermédiaire 29 lié à la structure de référence 3 et un centreur complémentaire intermédiaire 31 lié au sous-ensemble intermédiaire 9. Le centreur intermédiaire 29 et le centreur complémentaire intermédiaire 31 coopèrent l'un avec l'autre pour définir la position du sous-ensemble intermédiaire 9 par rapport à la structure de référence selon au moins la première direction D1. Cette position est typiquement définie sans jeu. Le premier centreur 17 et le centreur intermédiaire 29 sont disposés de préférence à proximité immédiate l'un de l'autre selon la première direction, de préférence à une distance inférieure à 10 mm, et encore de préférence à une distance inférieure à 5 mm.

Les centreurs complémentaires 19 et 31 sont donc disposés eux aussi à proximité immédiate l'un de l'autre selon la première direction.

Ainsi, le centreur intermédiaire complémentaire 31 est solidaire d'une extrémité du sous-ensemble intermédiaire 9 qui jouxte le premier sous-ensemble 5. Il est ainsi possible d'obtenir une tolérance extrêmement réduite entre le premier sous-ensemble 5 et le sous-ensemble intermédiaire 9.

Le dispositif de centrage 15 comprend avantageusement un centreur latéral secondaire 33 lié à la structure de référence 3 et un centreur complémentaire latéral secondaire 35 lié au sous-ensemble latéral 11. Le centreur latéral secondaire 33 et le centreur complémentaire latéral secondaire 35 coopèrent l'un avec l'autre pour définir la position du sous-ensemble latéral 11 par rapport à la structure de référence 3 selon au moins la première direction D1, avec un jeu.

Ceci permet ainsi de positionner initialement le sous-ensemble latéral 11, avant montage du sous-ensemble intermédiaire 9, la position définitive du sous-ensemble latéral 11 étant fixée au moment du montage du sous-ensemble intermédiaire 9.

Pour ce faire, le dispositif de centrage 15 comprend encore un centreur latéral primaire 37 lié au sous-ensemble latéral 11 et un centreur complémentaire latéral primaire 39 lié au sous-ensemble intermédiaire 9. Le centreur latéral primaire 37 et le centreur complémentaire latéral primaire 39 coopèrent l'un avec l'autre pour définir la position du sous-ensemble latéral 11 par rapport au sous-ensemble intermédiaire 9 selon au moins la première direction D1. Cette position est définie sans jeu.

Le centreur complémentaire latéral secondaire 35 est typiquement situé à une extrémité du sous-ensemble latéral 11 opposée au sous-ensemble intermédiaire 9 suivant la direction D1. Au contraire, le centreur latéral primaire 37 est situé sur une partie du sous-ensemble latéral 11 tournée vers le sous-ensemble intermédiaire 9. Le centreur latéral primaire complémentaire 39 est situé à une extrémité du sous-ensemble intermédiaire 9 tournée vers le sous-ensemble latéral 11.

La situation est sensiblement la même pour l'autre sous-ensemble latéral 13. Le dispositif de centrage 15 comprend un autre centreur latéral secondaire 41 lié à la structure de référence 3, et un autre centreur complémentaire latéral secondaire 43 lié à l'autre sous-ensemble latéral 13.

L'autre centreur latéral secondaire 41 et l'autre centreur complémentaire latéral secondaire 43 coopèrent l'un avec l'autre pour définir la position de l'autre sous-ensemble latéral 13 par rapport à la structure de référence 3 selon au moins la première direction D1 avec un jeu.

Comme précédemment, ceci permet de monter initialement l'autre sous-ensemble latéral 13 sur la structure de référence 3. La position finale de l'autre sous-ensemble latéral 13 n'est obtenue que lors du montage du second sous-ensemble 7.

Pour ce faire, le dispositif de centrage 15 comprend encore un autre centreur latéral primaire 45 lié à l'autre sous-ensemble latéral 13, et un autre centreur complémentaire latéral primaire 47 lié au second sous-ensemble 7.

L'autre centreur latéral primaire 45 et l'autre centreur complémentaire latéral primaire 47 coopèrent l'un avec l'autre pour définir la position de l'autre sous-ensemble latéral 13 par rapport au second sous-ensemble 7 au moins selon la première direction D1. Cette position est définie sans jeu.

Typiquement, l'autre centreur complémentaire latéral secondaire 43 est solidaire d'une extrémité de l'autre sous-ensemble latéral 13 opposé au second sous-ensemble 7 suivant la direction D1. En revanche, l'autre centreur latéral primaire 45 est lié à un bord du sous-ensemble latéral 13 tourné vers le second sous-ensemble 7.

Inversement, l'autre centreur complémentaire latéral primaire 47 est monté à une extrémité du second sous-ensemble 7 tournée vers l'autre sous-ensemble latéral 13.

Les différents centreurs et les différents centreurs complémentaires sont de tout type adapté pour la mise en position des pièces. Ils ne seront donc pas décrits ici plus en détail.

Il est à noter que, dans le cas d'une planche de bord, le sous-ensemble latéral 11 et l'autre sous-ensemble latéral 13 sont situés à des extrémités transversales opposées de la planche de bord.

Le dispositif de centrage 15 est agencé de telle sorte qu'au moins le premier sous-ensemble 5 est démontable sans démonter le second sous-ensemble 7. Typiquement, le second sous-ensemble 7 et/ou le sous-ensemble intermédiaire 9 sont également démontables sans avoir à démonter les autres sous-ensembles de la structure intérieure. Ceci est dû entre autre au fait que les sous-ensembles 5, 7, 9 ne coopèrent pas directement les uns avec les autres pour la mise en position des différents sous-ensembles les uns par rapport aux autres.

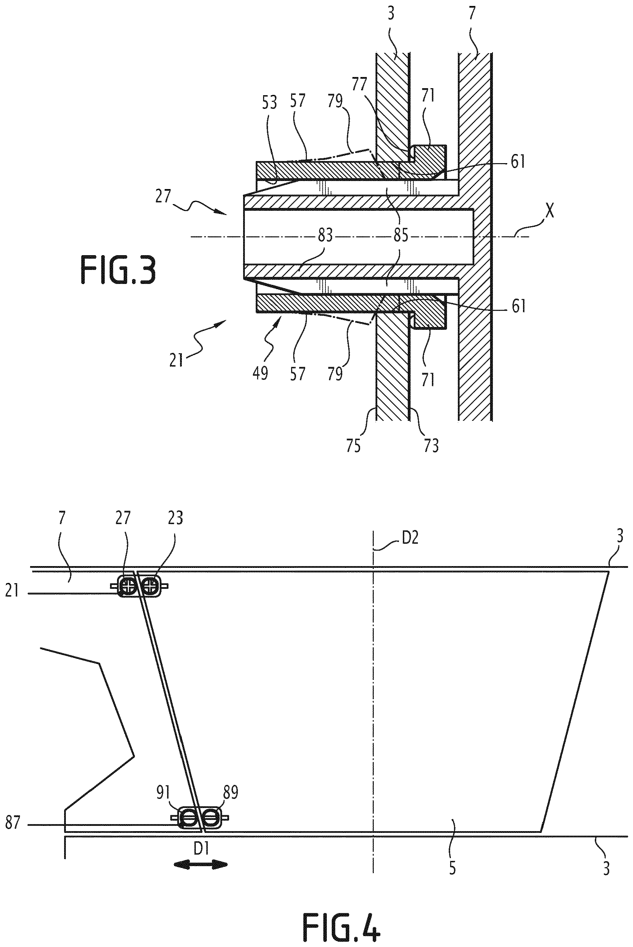

Le centreur flottant 21 est représenté sur les figures 2 et 3. Le centreur flottant comporte un corps 49 dans lequel sont ménagés deux orifices 51, 53 de réception du second centreur complémentaire 23 et du troisième centreur complémentaire 27. Comme visible sur la figure 3, les second et troisième centreurs complémentaires 23, 27 sont des pions s'étendant suivant une direction principale X à partir respectivement du premier sous-ensemble 5 et du second sous-ensemble 7. La direction principale X est sensiblement perpendiculaire à la première direction D1.

Dans l'exemple représenté, les orifices 51 et 53 s'étendent selon la direction principale X, et traversent le corps 49 de part en part. Ils sont de section constante perpendiculairement à la direction principale X.

Le centreur flottant 49 est engagé dans une ouverture 55, ménagée dans la structure de référence 3.

L'ouverture 55, suivant la première direction D1, est légèrement plus longue que le corps 49, de telle sorte que le corps 49 est susceptible de se déplacer suivant la première direction D1 dans l'ouverture 55.

En revanche, le corps 49 présente suivant une direction secondaire Y une largeur correspondant sensiblement à celle de l'ouverture 55. Le centreur flottant 21 ne peut donc pas se déplacer suivant la direction secondaire Y à l'intérieur de l'ouverture 55.

Comme visible sur la figure 2, dans l'exemple de réalisation représenté, le corps 49 présente perpendiculairement à la direction principale X une section sensiblement rectangulaire, délimitée par deux faces planes 57 parallèles à la première direction D1 et deux faces planes latérales 59, sensiblement parallèles à la direction secondaire Y. Les faces 57, 59 sont raccordés les uns aux autres par des arêtes arrondies. L'ouverture 55 est délimitée par deux bords droits opposés 61, parallèles à la première direction D1, contre lesquels les faces 57 peuvent glisser.

Les bords 61 sont raccordés l'un à l'autre par des bords 63 dans lesquels sont ménagées deux encoches 65. Les encoches 65 sont allongées suivant la première direction D1 et débouchent dans l'ouverture 55.

Le centreur flottant 21 comporte deux nervures 67 pointant à partir du corps 49 dans des sens opposés suivant la direction D1, et engagées dans les encoches 65. Les nervures 67 sont de largeur suivant la direction secondaire Y correspondant sensiblement à celle des encoches 65, de telle sorte qu'elles ne peuvent pas se déplacer à l'intérieur des encoches 65 selon la direction Y. En revanche, elles sont susceptibles de se déplacer dans les encoches 65 suivant la première direction D1.

Le centreur flottant 21 comporte encore des organes élastiques 69, qui sont des lames de ressort dans l'exemple représenté sur la figure 2. Ces organes élastiques 69 sont arc-boutés entre le corps 49 et les bords 63 de l'ouverture. Ensemble, ils rappellent le centreur flottant 21 suivant la première direction D1 vers le centre de l'ouverture 55.

En variante, le centreur flottant 21 ne comporte pas les organes élastiques 69.

Le centreur flottant 21 comporte encore des bords sortant 71, faisant saillie vers l'extérieur de l'ouverture 55 à partir du corps 49 (figure 3). Ces bords sortants 71 sont situés à une extrémité du corps 49 tournée vers les premier et second sous-ensembles 5, 7. Ils s'étendent le long des faces planes 57 du corps.

Comme visible sur la figure 3, la structure de référence 3 autour de l'ouverture 55 est une plaque présentant deux grandes faces opposées 73, 75, la grande face 73 étant tournée vers les premier et second sous-ensembles 5, 7. Les bords sortant 71 sont posés sur la grande face 73, de part et d'autre de l'ouverture 55, avec interposition de reliefs ponctuels 77 formé sous les bords sortant 71.

Le centreur flottant 21 comporte encore des pattes élastiques 79 prévues pour bloquer le centreur flottant 21 dans l'ouverture 55. Les pattes 79 sont susceptibles d'être escamotées élastiquement dans des encoches 81 ménagées dans le corps 49, comme visible sur la figure 2. Quand les pattes élastiques sont rabattues dans les encoches 81, le corps 49 est susceptible d'être introduit dans l'ouverture 55 suivant la direction principale X. Une fois les bords sortant 71 en appui contre la grande face 73, on se trouve dans la situation de la figure 3. Les pattes élastiques 79 sont pratiquement dans leur totalité sous la structure de référence 3, et reviennent élastiquement dans une position en saillie par rapport aux faces 57 du corps 49. Elles empêchent que le centreur flottant 21 soit extrait de l'ouverture 55 suivant un mouvement selon la direction principale X. En revanche, elles n'empêchent pas un coulissement du centreur flottant 21 suivant la première direction D1 à l'intérieur de l'ouverture 55.

Typiquement, l'amplitude du déplacement du centreur flottant 21 dans l'ouverture 55 selon la première direction D1 est de plus ou moins trois millimètres, la course étant donc de six millimètres au total.

Dans l'exemple de réalisation illustré sur les figures 2 et 3, les second et troisième centreurs complémentaires 23, 27 sont de même type. Ils comportent un tronc cylindrique creux 83, d'axe parallèle à la direction principale X. Le tronc 83 porte sur une face radialement externe, quatre nervures 85, disposées dans deux plans perpendiculaires l'un à l'autre. Les nervures 85 sont donc à 90° les unes des autres. Les nervures 85 sont en appui par leur tranche sur la surface interne des orifices 51, 53.

Les centreurs complémentaires 23, 27 n'ont donc aucun degré de liberté par rapport au centreur flottant 21, ni selon la première direction D1 ni selon la direction secondaire Y.

Une variante de réalisation de l'invention va maintenant être détaillée, en référence à la figure 4. Seuls les points par lesquels cette variante de réalisation diffère de celle des figures 1 à 3 seront détaillés ci-dessous. Les éléments identiques ou assurant la même fonction seront désignés par les mêmes références.

Dans la variante de réalisation de la figure 4, le dispositif de centrage 15 comprend un second centreur flottant 87 lié à la structure de référence 3 et un quatrième centreur complémentaire 89 lié au premier sous-ensemble 5.

Le second centreur flottant 87 est déplaçable par rapport à la structure de référence 3 selon la première direction D1. Le second centreur flottant 87 et le quatrième centreur complémentaire 89 coopèrent l'un avec l'autre pour définir la position du second centreur flottant 87 par rapport à la structure de référence 3 au moins selon la première direction D1.

Par ailleurs, le dispositif de centrage 15 comprend encore un cinquième centreur complémentaire 91 lié au second sous-ensemble 7. Le second centreur flottant 87 et le cinquième centreur complémentaire 91 coopèrent l'un avec l'autre pour définir la position du second sous-ensemble 7 par rapport au premier sous-ensemble 5 seulement selon la première direction D1, en laissant le second sous-ensemble 7 libre par rapport au premier sous-ensemble 5 selon une seconde direction D2 matérialisée sur la figure 4.

La seconde direction D2 est par exemple perpendiculaire au plan de roulement du véhicule.

Le centreur flottant 21 et le troisième centreur complémentaire 27 coopèrent en revanche l'un avec l'autre pour définir la position du second sous-ensemble 7 par rapport au premier sous-ensemble 5 à la fois selon la première direction D1 et selon la seconde direction D2.

Avantageusement, le quatrième centreur complémentaire 89 coopère avec le second centreur flottant 87 en laissant le second centreur flottant 87 libre par rapport au premier sous-ensemble 5 selon la seconde direction D2. De même, le cinquième centreur complémentaire 91 coopère de préférence avec le second centreur flottant 87 de telle sorte que le second centreur flottant 87 est libre suivant la seconde direction D2 par rapport au second sous-ensemble 7.

Typiquement, le quatrième centreur complémentaire 89 et le cinquième centreur complémentaire 91 comprennent par exemple seulement des nervures 85 s'étendant dans un plan contenant la première direction D1. Ils ne comportent pas de nervure 85 s'étendant parallèlement à la seconde direction D2.

Avantageusement, le premier centreur flottant 21 est disposé à proximité d'une face visible des premier et second sous-ensembles 5, 7. Il permet ainsi d'assurer une bonne mise en position des faces visibles des premier et second sous-ensembles 5, 7 suivant la première direction, de manière à ce qu'il n'y ait pas de fente trop large entre les deux pièces. Le premier centreur 21 permet également d'éviter qu'il ne se crée une dénivellation entre les faces visibles des deux sous-ensembles, qui nuirait à la qualité perçue.

Le second centreur flottant 87 est situé à proximité de faces non visibles des premier et second sous-ensembles. Le second centreur flottant 87 permet d'assurer le parallélisme entre les premier et second sous-ensembles 5, 7.

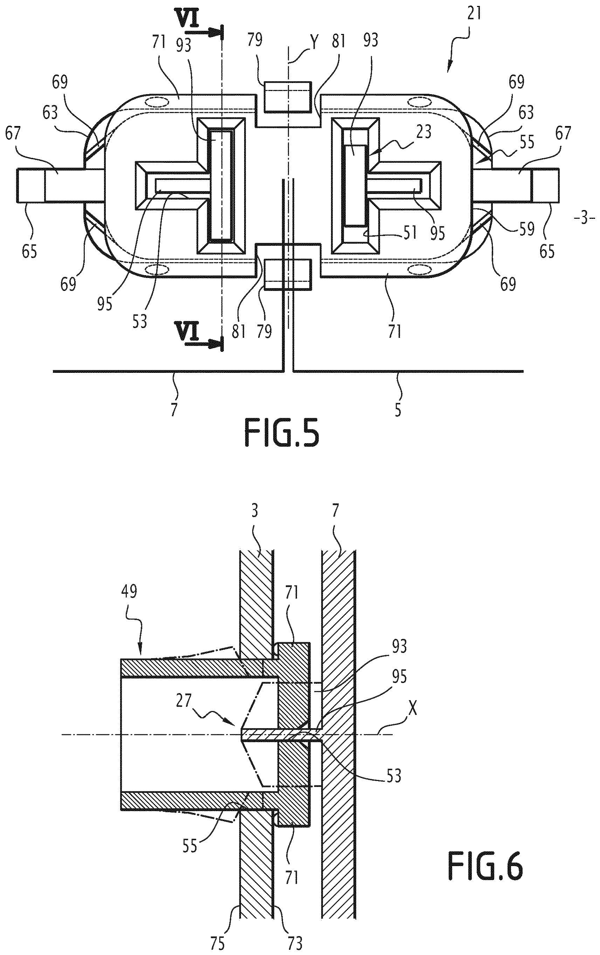

Une seconde variante de réalisation de l'invention va maintenant être détaillée, en référence aux figures 5 et 6. Seuls les points par lesquels cette variante de réalisation diffère de celle des figures 1 à 3 seront décrits ci-dessous. Les éléments identiques ou assurant la même fonction seront désignés par les mêmes références.

Dans cette variante de réalisation, au moins l'un des second et troisième centreurs complémentaires 23, 27 comprend au moins une première nervure 93 s'étendant dans un premier plan perpendiculaire à la première direction D1, et une seconde nervure 95 s'étendant entièrement d'un côté du premier plan.

Dans l'exemple représenté, à la fois le second et le troisième centreur complémentaires ont cette caractéristique, comme représenté sur la figure 5.

La seconde nervure 95 s'étend dans un plan parallèle à la première direction. Elle s'étend d'un côté de la première nervure opposée à l'autre centreur complémentaire. En d'autres termes, la nervure 95 du troisième centreur complémentaire 27 pointe à partir de la nervure 93 suivant la première direction D1 à l'opposé du second centreur complémentaire 23. De même, la nervure 95 du second centreur complémentaire 23 pointe suivant la première direction D1 à partir de la première nervure 93 à l'opposé du troisième centreur complémentaire 27.

Dans un tel mode de réalisation, le centreur flottant 21 est plus compact.

Dans cette variante de réalisation, les orifices 51, 53 ont une forme en T, sensiblement complémentaire de celle des second et troisième centreurs complémentaires 23, 27.

Sur la partie gauche de la figure 5 est illustré un exemple de réalisation dans lequel la première nervure 93 est engagée dans la portion complémentaire de l'orifice 53 sans degré de liberté suivant la seconde direction Y et suivant la première direction D1. En d'autres termes, dans cet exemple de réalisation, il n'y a aucun degré de liberté suivant la seconde direction Y et suivant la première direction D1 du centreur complémentaire 27 par rapport au centreur flottant 21.

Un autre exemple de réalisation est illustré sur la partie droite de la figure 5. La nervure transversale 93 est engagée dans la partie complémentaire de l'orifice 51 sans degré de liberté suivant la première direction D1 et avec un degré de liberté suivant la seconde direction Y. De même, la nervure longitudinale 95 présente un degré de liberté suivant la seconde direction Y par rapport à la partie correspondante de l'orifice 51.

En d'autres termes, dans cet exemple de réalisation, le centreur complémentaire 23 présente un degré de liberté suivant la seconde direction Y par rapport au centreur flottant 21, mais ne présente pas de degré de liberté suivant la première direction D1.

L'invention porte également sur un procédé de montage de la structure intérieure décrite ci-dessus.

Le procédé comprend les étapes suivantes :
- centrage du premier sous-ensemble 5 par rapport à la structure de référence 3 au moins suivant la première direction D1, à l'aide du premier centreur 17 et du premier centreur complémentaire 19 ;
- positionnement du centreur flottant 21 par rapport à la structure de référence 3 selon au moins la première direction D1 à l'aide du second centreur complémentaire 23 ;
- centrage du second sous-ensemble 7 par rapport au premier sous-ensemble 5 selon au moins la direction D1, à l'aide du troisième centreur complémentaire 27 et du centreur flottant 21.

Quand la structure intérieure 1 comporte un sous-ensemble intermédiaire 9 tel que décrit ci-dessus, le procédé comporte en outre, avant les étapes de centrage du premier sous-ensemble 5, de positionnement du centreur flottant 21 et de centrage du second sous-ensemble 7, une étape de centrage de ce sous-ensemble intermédiaire 9 à l'aide du centreur intermédiaire 29 et du centreur complémentaire intermédiaire 31. Le centreur intermédiaire 29 et le centreur complémentaire intermédiaire 31 coopèrent l'un avec l'autre pour définir la position du sous-ensemble intermédiaire 9 par rapport à la structure de référence 3 selon au moins la première direction. Cette position est définie sans jeu.

Quand la structure intérieure 1 comporte un sous-ensemble latéral 11 tel que décrit ci-dessus, le procédé comporte, avant les étapes de centrage du premier sous-ensemble, de positionnement du centreur flottant 21, de centrage du second sous-ensemble 7 et de centrage du sous-ensemble intermédiaire 9, une étape de centrage provisoire du sous-ensemble latéral 11, à l'aide du centreur latéral secondaire 33 lié à la structure de référence 3 et du centreur complémentaire latéral secondaire 35 lié au sous-ensemble latéral 11.

Le centreur latéral secondaire 33 et le centreur complémentaire latéral secondaire 35 coopèrent l'un avec l'autre pour définir la position du sous-ensemble latéral 11 par rapport à la structure de référence 3 au moins selon la première direction D1 avec un jeu.

En outre, dans ce cas, le procédé comprend une étape de centrage final du sous-ensemble latéral 11 à l'aide du centreur latéral primaire 37 lié au sous-ensemble latéral 11, et du centreur complémentaire latéral primaire 39 lié au sous-ensemble intermédiaire 9. Le centreur latéral primaire 37 et le centreur complémentaire latéral primaire 39 coopèrent l'un avec l'autre pour définir la position du sous-ensemble latéral 11 par rapport au sous-ensemble intermédiaire 9 selon au moins la première direction D1. Cette position est définie sans jeu.

Ainsi, la mise en position finale du sous-ensemble latéral 11 intervient au moment du montage du sous-ensemble intermédiaire 9.

De même, quand la structure intérieure 1 comporte un autre sous-ensemble latéral 13, le procédé comprend, avant les étapes de centrage du premier sous-ensemble 5, de positionnement du centreur flottant 21, de centrage du second sous-ensemble 7, une étape de centrage provisoire de l'autre sous-ensemble latéral 13 à l'aide de l'autre centreur latéral secondaire 41 lié à la structure de référence 3 et de l'autre centreur complémentaire latéral secondaire 43 lié à l'autre sous-ensemble latéral 13.

L'autre centreur latéral secondaire 41 et l'autre centreur complémentaire latéral secondaire 43 coopèrent l'un avec l'autre pour définir la position de l'autre sous-ensemble latéral 13 par rapport à la structure de référence 3 selon au moins la première direction avec un jeu.

Dans ce cas, le procédé comprend en outre une étape de centrage finale de l'autre sous-ensemble latéral 13 à l'aide de l'autre centreur latéral primaire 45 lié à l'autre sous-ensemble latéral 13 et de l'autre centreur complémentaire latéral primaire 47 lié au second sous-ensemble.

L'autre centreur latéral primaire 45 et l'autre centreur complémentaire latéral primaire 47 coopèrent l'un avec l'autre pour définir la position de l'autre sous-ensemble latéral 13 par rapport au second sous-ensemble 7 selon au moins la première direction D1. Cette position est définie sans jeu.

Les sous-ensembles sont montés dans la structure de référence 3 dans l'ordre suivant :
- montage provisoire du sous-ensemble latéral 11, et/ou de l'autre sous-ensemble latéral 13, le cas échéant ;
- montage du sous-ensemble intermédiaire 9, le cas échéant, qui provoque le centrage du sous-ensemble latéral 11 si celui-ci est présent ;
- montage du premier sous-ensemble 5, qui provoque la mise en position du centreur flottant 21 ;
- montage du second sous-ensemble 7, qui provoque le centrage de l'autre sous-ensemble 13 le cas échéant.

## Revendications

1. Structure intérieure de véhicule, la structure (1) comprenant :
- une structure de référence (3) ;
- des premier et second sous-ensembles (5, 7) ;
- un dispositif de centrage (15) ;
**caractérisée en ce que** le dispositif de centrage (15) comprend :
- un premier centreur (17) lié à la structure de référence (3) et un premier centreur complémentaire (19) lié au premier sous-ensemble (5), le premier centreur (17) et le premier centreur complémentaire (19) coopérant l'un avec l'autre pour définir la position du premier sous-ensemble (5) par rapport à la structure de référence (3) selon au moins une première direction (D1) ;
- un centreur flottant (21) lié à la structure de référence (3) et un second centreur complémentaire (23) lié au premier sous-ensemble (5), le centreur flottant (21) étant déplaçable par rapport à la structure de référence (3) selon la première direction (D1), le centreur flottant (21) et le second centreur complémentaire (23) coopérant l'un avec l'autre pour définir la position du centreur flottant (21) par rapport à la structure de référence (3) selon au moins la première direction (D1) ;
- un troisième centreur complémentaire (27) lié au second sous-ensemble (7), le centreur flottant (21) et le troisième centreur complémentaire (27) coopérant l'un avec l'autre pour définir la position du second sous-ensemble (7) par rapport au premier sous-ensemble (5) selon au moins la première direction (D1).

2. Structure selon la revendication 1, **caractérisée en ce que** la structure (1) comprend un sous-ensemble intermédiaire (9), le dispositif de centrage (15) comprenant un centreur intermédiaire (29) lié à la structure de référence (3) et un centreur complémentaire intermédiaire (31) lié au sous-ensemble intermédiaire (9), le centreur intermédiaire (29) et le centreur complémentaire intermédiaire (31) coopérant l'un avec l'autre pour définir la position du sous-ensemble intermédiaire (9) par rapport à la structure de référence (3) selon au moins la première direction (D1).

3. Structure selon la revendication 2, **caractérisée en ce que** le premier centreur (17) et le centreur intermédiaire (29) sont disposés à proximité l'un de l'autre selon la première direction (D1), de préférence à une distance inférieure à 10 mm.

4. Structure selon la revendication 2 ou 3, **caractérisée en ce que** la structure (1) comprend un sous-ensemble latéral (11), le dispositif de centrage (15) comprenant :
- un centreur latéral (33) secondaire lié à la structure (3) de référence et un centreur complémentaire latéral secondaire (35) lié au sous-ensemble latéral (11), le centreur latéral secondaire (33) et le centreur complémentaire latéral secondaire (35) coopérant l'un avec l'autre pour définir la position du sous-ensemble latéral (11) par rapport à la structure de référence (3) selon au moins la première direction (D1) avec un jeu ;
- un centreur latéral primaire (37) lié au sous-ensemble latéral (11) et un centreur complémentaire latéral primaire (39) lié au sous-ensemble intermédiaire (9), le centreur latéral primaire (37) et le centreur complémentaire latéral primaire (39) coopérant l'un avec l'autre pour définir la position du sous-ensemble latéral (11) par rapport au sous-ensemble intermédiaire (9) selon au moins la première direction (D1).

5. Structure selon l'une quelconque des revendications précédentes, **caractérisée en ce que** la structure comprend un autre sous-ensemble latéral (13), le dispositif de centrage (15) comprenant :
- un autre centreur latéral secondaire (41) lié à la structure de référence (3) et un autre centreur complémentaire latéral secondaire (43) lié à l'autre sous-ensemble latéral (13), l'autre centreur latéral secondaire (41) et l'autre centreur complémentaire latéral secondaire (43) coopérant l'un avec l'autre pour définir la position de l'autre sous-ensemble latéral (13) par rapport à la structure de référence (3) selon au moins la première direction (D1) avec un jeu ;
- un autre centreur latéral primaire (45) lié au deuxième sous-ensemble (7) et un autre centreur complémentaire latéral primaire (47) lié à l'autre sous-ensemble latéral (13), l'autre centreur latéral primaire (45) et l'autre centreur complémentaire latéral primaire (47) coopérant l'un avec l'autre pour définir la position de l'autre sous-ensemble latéral (13) par rapport au second sous-ensemble (7) selon au moins la première direction (D1).

6. Structure selon l'une quelconque des revendications précédentes, **caractérisée en ce que** au moins le premier sous-ensemble (5) est démontable sans démonter le second sous-ensemble (7).

7. Structure selon l'une quelconque des revendications précédentes, **caractérisée en ce que** le dispositif de centrage (15) comprend :
- un second centreur flottant (87) lié à la structure de référence (3) et un quatrième centreur complémentaire (89) lié au premier sous-ensemble (5), le second centreur flottant (87) étant déplaçable par rapport à la structure de référence (3) selon la première direction (D1), le second centreur flottant (87) et le quatrième centreur complémentaire (89) coopérant l'un avec l'autre pour définir la position du second centreur flottant (87) par rapport à la structure de référence (3) au moins selon la première direction (D1) ;
- un cinquième centreur complémentaire (91) lié au second sous-ensemble (7), le second centreur flottant (87) et le cinquième centreur complémentaire (91) coopérant l'un avec l'autre pour définir la position du second sous-ensemble (7) par rapport au premier sous-ensemble (5) seulement selon la première direction (D1) et laissant le second sous-ensemble (7) libre par rapport au premier sous-ensemble (5) selon une seconde direction (D2) ;
- le centreur flottant (21) et le troisième centreur complémentaire (27) coopérant l'un avec l'autre pour définir la position du second sous-ensemble (7) par rapport au premier sous-ensemble (5) selon la première direction (D1) et la seconde direction (D2).

8. Structure selon l'une quelconque des revendications précédentes, **caractérisée en ce qu'**au moins l'un des second et troisième centreurs complémentaires (23, 27) comprend au moins une première nervure (93) s'étendant dans un premier plan perpendiculaire à la première direction (D1), et une seconde nervure (95) s'étendant entièrement d'un côté du premier plan.

9. Procédé de montage d'une structure intérieure selon l'une quelconque des revendications précédentes, le procédé comprend les étapes suivantes :
- centrage du premier sous-ensemble (5) par rapport à la structure de référence (3) au moins selon la première direction (D1), à l'aide du premier centreur (17) et du premier centreur complémentaire (19);
- positionnement du centreur flottant (21) par rapport à la structure de référence (3) selon au moins la première direction (D1) à l'aide du second centreur complémentaire (23) ;
- centrage du second sous-ensemble (7) par rapport au premier sous-ensemble (5) selon au moins la première direction (D1) à l'aide du troisième centreur complémentaire (27) et du centreur flottant (21).

10. Procédé selon la revendication 9, **caractérisé en ce que** le procédé comprend, avant les étapes de centrage du premier sous-ensemble (5), de positionnement du centreur flottant (21) et de centrage du second sous-ensemble (7), une étape de centrage d'un sous-ensemble (3) intermédiaire (9) à l'aide d'un centreur intermédiaire (29) lié à la structure de référence (3) et d'un centreur complémentaire intermédiaire (31) lié au sous-ensemble intermédiaire (9), le centreur intermédiaire (29) et le centreur complémentaire intermédiaire (31) coopérant l'un avec l'autre pour définir la position du sous-ensemble intermédiaire (9) par rapport à la structure de référence (3) selon au moins la première direction (D1).

11. Procédé selon la revendication 10, **caractérisé en ce que** :
- le procédé comprend, avant les étapes de centrage du premier sous-ensemble (5), de positionnement du centreur flottant (21), de centrage du second sous-ensemble (7) et de centrage du sous-ensemble intermédiaire (9), une étape de centrage provisoire d'un sous-ensemble latéral (11) à l'aide d'un centreur latéral secondaire (33) lié à la structure de référence (3) et d'un centreur complémentaire latéral secondaire (35) lié au sous-ensemble latéral (11), le centreur latéral secondaire (33) et le centreur complémentaire latéral secondaire (35) coopérant l'un avec l'autre pour définir la position du sous-ensemble latéral (11) par rapport à la structure de référence (3) selon au moins la première direction (D1) avec un jeu,
- le procédé comprenant en outre une étape de centrage final du sous-ensemble latéral (1) à l'aide d'un centreur latéral primaire (37) lié au sous-ensemble latéral (11) et un centreur complémentaire latéral primaire (39) lié au sous-ensemble intermédiaire (9), le centreur latéral primaire (37) et le centreur complémentaire latéral primaire (39) coopérant l'un avec l'autre pour définir la position du sous-ensemble latéral (11) par rapport au sous-ensemble intermédiaire (9) selon au moins la première direction (D1).

12. Procédé selon la revendication 10 ou 11, **caractérisé en ce que** :
- le procédé comprend, avant les étapes de centrage du premier sous-ensemble (5), de positionnement du centreur flottant (21), de centrage du second sous-ensemble (7), une étape de centrage provisoire d'un autre sous-ensemble latéral (13) à l'aide d'un autre centreur latéral secondaire (41) lié à la structure de référence (3) et d'un autre centreur complémentaire latéral secondaire (43) lié à l'autre sous-ensemble latéral (13), l'autre centreur latéral secondaire (41) et l'autre centreur complémentaire latéral secondaire (43) coopérant l'un avec l'autre pour définir la position de l'autre sous-ensemble latéral (13) par rapport à la structure de référence (3) selon au moins la première direction (D1) avec un jeu,
- le procédé comprenant en outre une étape de centrage final de l'autre sous-ensemble latéral (13) à l'aide d'un autre centreur latéral primaire (45) lié à l'autre sous-ensemble latéral (13) et d'un autre centreur complémentaire latéral primaire (47) lié au second sous-ensemble (7), l'autre centreur latéral primaire (45) et l'autre centreur complémentaire latéral primaire (47) coopérant l'un avec l'autre pour définir la position de l'autre sous-ensemble latéral (13) par rapport au second sous-ensemble (7) selon au moins la première direction (D1).

## Patentansprüche

1. Fahrzeug-Innenstruktur, wobei die Struktur (1) aufweist:
- eine Referenzstruktur (3),
- eine erste und eine zweite Untereinrichtung (5, 7),
- eine Zentrierungs-Einrichtung (15),
**dadurch gekennzeichnet, dass** die Zentrierungs-Einrichtung (15) aufweist:
- eine erste Zentrierungsvorrichtung (17), die mit der Referenzstruktur (3) verbunden ist, und eine erste Komplementär-Zentrierungsvorrichtung (19), die mit der ersten Untereinrichtung (5) verbunden ist, wobei die erste Zentrierungsvorrichtung (17) und die erste Komplementär-Zentrierungsvorrichtung (19) zusammenwirken zum Definieren der Position der ersten Untereinrichtung (5) relativ zu der Referenzstruktur (3) entlang wenigstens einer ersten Richtung (D1),
- eine schwimmende Zentrierungsvorrichtung (21), die mit der Referenzstruktur (3) verbunden ist, und eine zweite Komplementär-Zentrierungsvorrichtung (23), die mit der ersten Untereinrichtung (5) verbunden ist, wobei die schwimmende Zentrierungsvorrichtung (21) relativ zu der Referenzstruktur (3) verlagerbar ist entlang der ersten Richtung (D1), wobei die schwimmende Zentrierungsvorrichtung (21) und die zweite Komplementär-Zentrierungsvorrichtung (23) zusammenwirken zum Definieren der Position der schwimmenden Zentrierungsvorrichtung (21) relativ zu der Referenzstruktur (3) entlang wenigstens der ersten Richtung (D1),
- eine dritte Komplementär-Zentrierungsvorrichtung (27), die mit der zweiten Untereinrichtung (7) verbunden ist, wobei die schwimmende Zentrierungsvorrichtung (21) und die dritte Komplementär-Zentrierungsvorrichtung (27) zusammenwirken zum Definieren der Position der zweiten Untereinrichtung (7) relativ zu der ersten Untereinrichtung (5) entlang wenigstens der ersten Richtung (D1).

2. Struktur gemäß Anspruch 1, **dadurch gekennzeichnet, dass** die Struktur (1) aufweist eine zwischenliegende Untereinrichtung (9), wobei die Zentrierungs-Einrichtung (15) aufweist eine zwischenliegende Zentrierungsvorrichtung (29), die mit der Referenzstruktur (3) verbunden ist, und eine zwischenliegende Komplementär-Zentrierungsvorrichtung (31), die mit der zwischenliegenden Untereinrichtung (9) verbunden ist, wobei die zwischenliegende Zentrierungsvorrichtung (29) und die zwischenliegende Komplementär-Zentrierungsvorrichtung (31) zusammenwirken zum Definieren der Position der zwischenliegenden Untereinrichtung (9) relativ zu der Referenzstruktur (3) entlang wenigstens der ersten Richtung (D1) .

3. Struktur gemäß Anspruch 2, **dadurch gekennzeichnet, dass** die erste Zentrierungsvorrichtung (17) und die zwischenliegende Zentrierungsvorrichtung (29) entlang der ersten Richtung (D1) nahe zueinander angeordnet sind, bevorzugt in einem Abstand kleiner als 10 mm.

4. Struktur gemäß Anspruch 2 oder 3, **dadurch gekennzeichnet, dass** die Struktur (1) aufweist eine laterale Untereinheit (11), wobei die Zentrierungs-Einrichtung (15) aufweist:
- eine sekundäre laterale Zentrierungsvorrichtung (33), die mit der Referenzstruktur (3) verbunden ist, und eine sekundäre laterale Komplementär-Zentrierungsvorrichtung (35), die mit der lateralen Untereinheit (11) verbunden ist, wobei die sekundäre laterale Zentrierungsvorrichtung (33) und die sekundäre laterale Komplementär-Zentrierungsvorrichtung (35) zusammenwirken zum Definieren der Position der lateralen Untereinrichtung (11) relativ zu der Referenzstruktur (3) entlang wenigstens der ersten Richtung (D1) mit einem Spiel,
- eine primäre laterale Zentrierungsvorrichtung (37), die mit der lateralen Untereinrichtung (11) verbunden ist, und eine primäre laterale Komplementär-Zentrierungsvorrichtung (39), die mit der zwischenliegenden Untereinrichtung (9) verbunden ist, wobei die primäre laterale Zentrierungsvorrichtung (37) und die primäre laterale Komplementär-Zentrierungsvorrichtung (39) zusammenwirken zum Definieren der Position der lateralen Untereinrichtung (11) relativ zu der zwischenliegenden Untereinrichtung (9) entlang wenigstens der ersten Richtung (D1) .

5. Struktur gemäß irgendeinem der vorhergehenden Ansprüche, **dadurch gekennzeichnet, dass** die Struktur eine andere laterale Untereinheit (15) aufweist, wobei die Zentrierungs-Einrichtung (15) aufweist:
- eine andere sekundäre laterale Zentrierungsvorrichtung (41), die mit der Referenzstruktur (3) verbunden ist, und eine andere sekundäre laterale Komplementär-Zentrierungsvorrichtung (43), die mit der anderen lateralen Untereinrichtung (13) verbunden ist, wobei die andere sekundäre laterale Zentrierungsvorrichtung (41) und die andere sekundäre laterale Komplementär-Zentrierungsvorrichtung (43) zusammenwirken zum Definieren der Position der anderen lateralen Untereinrichtung (13) relativ zu der Referenzstruktur (3) entlang wenigstens der ersten Richtung (D1) mit einem Spiel,
- eine andere primäre laterale Zentrierungsvorrichtung (45), die mit der zweiten Untereinrichtung (7) verbunden ist, und eine andere primäre laterale Komplementär-Zentrierungsvorrichtung (47), die mit der anderen lateralen Untereinrichtung (13) verbunden ist, wobei die andere primäre laterale Zentrierungsvorrichtung (45) und die andere primäre laterale Komplementär-Zentrierungsvorrichtung (47) zusammenwirken zum Definieren der Position der anderen lateralen Untereinrichtung (13) relativ zu der zweiten Untereinrichtung (7) entlang wenigstens der ersten Richtung (D1) .

6. Struktur gemäß irgendeinem der vorhergehenden Ansprüche, **dadurch gekennzeichnet, dass** wenigstens die erste Untereinrichtung (5) demontierbar ist, ohne die zweite Untereinrichtung (7) zu demontieren.

7. Struktur gemäß irgendeinem der vorhergehenden Ansprüche, **dadurch gekennzeichnet, dass** die Zentrierungs-Einrichtung (15) aufweist:
- eine zweite schwimmende Zentrierungsvorrichtung (87), die mit der Referenzstruktur (3) verbunden ist, und eine vierte Komplementär-Zentrierungsvorrichtung (89), die mit der ersten Untereinrichtung (5) verbunden ist, wobei die zweite schwimmende Zentrierungsvorrichtung (87) verlagerbar ist relativ zu der Referenzstruktur (3) entlang der ersten Richtung (D1), wobei die zweite schwimmende Zentrierungsvorrichtung (87) und die vierte Komplementär-Zentrierungsvorrichtung (89) zusammenwirken zum Definieren der Position der zweiten schwimmenden Zentrierungsvorrichtung (87) relativ zu der Referenzstruktur (3) wenigstens entlang der ersten Richtung (D1),
- eine fünfte Komplementär-Zentrierungsvorrichtung (91), die mit der zweiten Untereinrichtung (7) verbunden ist, wobei die zweite schwimmende Zentrierungsvorrichtung (87) und die fünfte Komplementär-Zentrierungsvorrichtung (91) zusammenwirken zum Definieren der Position der zweiten Untereinrichtung (7) relativ zu der ersten Untereinrichtung (5) nur entlang der ersten Richtung (D1) und unter frei Lassen der zweiten Untereinrichtung (7) relativ zu der ersten Untereinrichtung (5) entlang einer zweiten Richtung (D2),
- wobei die schwimmende Zentrierungsvorrichtung (21) und die dritte Komplementär-Zentrierungsvorrichtung (27) zusammenwirken zum Definieren der Position der zweiten Untereinrichtung (7) relativ zu der ersten Untereinrichtung (5) entlang der ersten Richtung (D1) und der zweiten Richtung (D2) .

8. Struktur gemäß irgendeinem der vorhergehenden Ansprüche, **dadurch gekennzeichnet, dass** wenigstens die eine von der zweiten und der dritten Komplementär-Zentrierungsvorrichtung (23, 27) aufweist wenigstens eine erste Rippe (93), die sich in einer ersten Ebene erstreckt, die senkrecht zu der ersten Richtung (D1) ist, und eine zweite Rippe (95), die sich gänzlich auf einer Seite der ersten Ebene erstreckt.

9. Verfahren zum Montieren einer Innenstruktur gemäß irgendeinem der vorhergehenden Ansprüche, wobei das Verfahren die folgenden Schritte aufweist:
- Zentrieren der ersten Untereinrichtung (5) relativ zu der Referenzstruktur (3) wenigstens entlang der ersten Richtung (D1) mit Hilfe der ersten Zentrierungsvorrichtung (17) und der ersten Komplementär-Zentrierungsvorrichtung (19),
- Positionieren der schwimmenden Zentrierungsvorrichtung (21) relativ zu der Referenzstruktur (3) entlang wenigstens der ersten Richtung (D1) mit Hilfe der zweiten Komplementär-Zentrierungsvorrichtung (23),
- Zentrieren der zweiten Untereinrichtung (7) relativ zu der ersten Untereinrichtung (5) entlang wenigstens der ersten Richtung (D1) mit Hilfe der dritten Komplementär-Zentrierungsvorrichtung (27) und der schwimmenden Zentrierungsvorrichtung (21).

10. Verfahren gemäß Anspruch 9, **dadurch gekennzeichnet, dass** das Verfahren aufweist, vor den Schritten des Zentrierens der ersten Untereinrichtung (5), des Positionierens der schwimmenden Zentrierungsvorrichtung (21) und des Zentrierens der zweiten Untereinrichtung (7), einen Schritt des Zentrierens einer zwischenliegenden (9) Untereinrichtung (3) mit Hilfe einer zwischenliegenden Zentrierungsvorrichtung (29), die mit der Referenzstruktur (3) verbunden ist, und einer zwischenliegenden Komplementär-Zentrierungsvorrichtung (31), die mit der zwischenliegenden Untereinrichtung (9) verbunden ist, wobei die zwischenliegende Zentrierungsvorrichtung (29) und die zwischenliegende Komplementär-Zentrierungsvorrichtung (31) zusammenwirken zum Definieren der Position der zwischenliegenden Untereinrichtung (9) relativ zu der Referenzstruktur (3) entlang wenigstens der ersten Richtung (D1).

11. Verfahren gemäß Anspruch 10, **dadurch gekennzeichnet, dass**:
- das Verfahren aufweist, vor den Schritten des Zentrierens der ersten Untereinrichtung (5), des Positionierens der schwimmenden Zentrierungsvorrichtung (21), des Zentrierens der zweiten Untereinrichtung (7) und des Zentrierens der zwischenliegenden Untereinrichtung (9), einen Schritt des provisorischen Zentrierens einer lateralen Untereinrichtung (11) mit Hilfe einer sekundären lateralen Zentrierungsvorrichtung (33), die mit der Referenzstruktur (3) verbunden ist, und einer sekundären lateralen Komplementär-Zentrierungsvorrichtung (35), die mit der lateralen Untereinrichtung (11) verbunden ist, wobei die sekundäre laterale Zentrierungsvorrichtung (33) und die sekundäre laterale Komplementär-Zentrierungsvorrichtung (35) zusammenwirken zum Definieren der Position der lateralen Untereinrichtung (11) relativ zu der Referenzstruktur (3) entlang wenigstens der ersten Richtung (D1) mit einem Spiel,
- wobei das Verfahren ferner aufweist einen Schritt des finalen Zentrierens der lateralen Untereinrichtung (1) mit Hilfe einer primären lateralen Zentrierungsvorrichtung (37), die mit der lateralen Untereinrichtung (11) verbunden ist, und einer primären lateralen Komplementär-Zentrierungsvorrichtung (39), die mit der zwischenliegenden Untereinrichtung (9) verbunden ist, wobei die primäre laterale Zentrierungsvorrichtung (37) und die primäre laterale Komplementär-Zentrierungsvorrichtung (39) zusammenwirken zum Definieren der Position der lateralen Untereinrichtung (11) relativ zu der zwischenliegenden Untereinrichtung (9) entlang wenigstens der ersten Richtung (D1).

12. Verfahren gemäß Anspruch 10 oder 11, **dadurch gekennzeichnet, dass**:
- das Verfahren aufweist, vor den Schritten des Zentrierens der ersten Untereinrichtung (5), des Positionierens der schwimmenden Zentrierungsvorrichtung (21), des Zentrierens der zweiten Untereinrichtung (7), einen Schritt des provisorischen Zentrierens einer anderen lateralen Untereinrichtung (13) mit Hilfe einer anderen sekundären lateralen Zentrierungsvorrichtung (41), die mit der Referenzstruktur (3) verbunden ist, und einer anderen sekundären lateralen Komplementär-Zentrierungsvorrichtung (43), die mit der anderen lateralen Untereinrichtung (13) verbunden ist, wobei die andere sekundäre laterale Zentrierungsvorrichtung (41) und die andere sekundäre laterale Komplementär-Zentrierungsvorrichtung (43) zusammenwirken zum Definieren der Position der anderen lateralen Untereinrichtung (13) relativ zu der Referenzstruktur (3) entlang zumindest der ersten Richtung (D1) mit einem Spiel,
- wobei das Verfahren ferner aufweist einen Schritt des finalen Zentrierens der anderen lateralen Untereinrichtung (13) mit Hilfe einer anderen primären lateralen Zentrierungsvorrichtung (45), die mit der anderen lateralen Untereinrichtung (13) verbunden ist, und einer anderen primären lateralen Komplementär-Zentrierungsvorrichtung (47), die mit der zweiten Untereinrichtung (7) verbunden ist, wobei die andere primäre laterale Zentrierungsvorrichtung (45) und die andere primäre laterale Komplementär-Zentrierungsvorrichtung (47) zusammenwirken zum Definieren der Position der anderen lateralen Untereinrichtung (13) relativ zu der zweiten Untereinrichtung (7) entlang wenigstens der ersten Richtung (D1).

## Claims

1. Vehicle internal structure, the structure (1) comprising:
- a reference structure (3);
- first and second sub-assemblies (5, 7);
- a centring arrangement (15);
**characterised in that** the centring arrangement (15) comprises:
- a first centring device (17) associated with the reference structure (3) and a first complementary centring device (19) associated with the first sub-assembly (5), the first centring device (17) and the first complementary centring device (19) cooperating with one another to define the position of the first sub-assembly (5) relative to the reference structure (3) in at least a first direction (D1);
- a floating centring device (21) associated with the reference structure (3) and a second complementary centring device (23) associated with the first sub-assembly (5), the floating centring device (21) being displaceable relative to the reference structure (3) in the first direction (D1), the floating centring device (21) and the second complementary centring device (23) cooperating with one another to define the position of the floating centring device (21) relative to the reference structure (3) in at least the first direction (D1);
- a third complementary centring device (27) associated with the second sub-assembly (7), the floating centring device (21) and the third complementary centring device (27) cooperating with one another to define the position of the second sub-assembly (7) relative to the first sub-assembly (5) in at least the first direction (D1).

2. Structure according to claim 1, **characterised in that** the structure (1) comprises an intermediate sub-assembly (9), the centring arrangement (15) comprising an intermediate centring device (29) associated with the reference structure (3) and a complementary intermediate centring device (31) associated with the intermediate sub-assembly (9), the intermediate centring device (29) and the complementary intermediate centring device (31) cooperating with one another to define the position of the intermediate sub-assembly (9) relative to the reference structure (3) in at least the first direction (D1).

3. Structure according to claim 2, **characterised in that** the first centring device (17) and the intermediate centring device (29) are arranged close to one another in the first direction (D1), preferably at a distance of less than 10 mm.

4. Structure according to claim 2 or 3, **characterised in that** the structure (1) comprises a lateral sub-assembly (11), the centring arrangement (15) comprising:
- a secondary lateral centring device (33) associated with the reference structure (3) and a complementary secondary lateral centring device (35) associated with the lateral sub-assembly (11), the secondary lateral centring device (33) and the complementary secondary lateral centring device (35) cooperating with one another to define the position of the lateral sub-assembly (11) relative to the reference structure (3) in at least the first direction (D1) with a clearance;
- a primary lateral centring device (37) associated with the lateral sub-assembly (11) and a complementary primary lateral centring device (39) associated with the intermediate sub-assembly (9), the primary lateral centring device (37) and the complementary primary lateral centring device (39) cooperating with one another to define the position of the lateral sub-assembly (11) relative to the intermediate sub-assembly (9) in at least the first direction (D1).

5. Structure according to any one of the preceding claims, **characterised in that** the structure comprises another lateral sub-assembly (13), the centring arrangement (15) comprising:
- another secondary lateral centring device (41) associated with the reference structure (3) and another complementary secondary lateral centring device (43) associated with the other lateral sub-assembly (13), the other secondary lateral centring device (41) and the other complementary secondary lateral centring device (43) cooperating with one another to define the position of the other lateral sub-assembly (13) relative to the reference structure (3) in at least the first direction (D1) with a clearance;
- another primary lateral centring device (45) associated with the second sub-assembly (7) and another complementary primary lateral centring device (47) associated with the other lateral sub-assembly (13), the other primary lateral centring device (45) and the other complementary primary lateral centring device (47) cooperating with one another to define the position of the other lateral sub-assembly (13) relative to the second sub-assembly (7) in at least the first direction (D1).

6. Structure according to any one of the preceding claims, **characterised in that** at least the first sub-assembly (5) is dismountable without dismounting the second sub-assembly (7).

7. Structure according to any one of the preceding claims, **characterised in that** the centring arrangement (15) comprises:
- a second floating centring device (87) associated with the reference structure (3) and a fourth complementary centring device (89) associated with the first sub-assembly (5), the second floating centring device (87) being displaceable relative to the reference structure (3) in the first direction (D1), the second floating centring device (87) and the fourth complementary centring device (89) cooperating with one another to define the position of the second floating centring device (87) relative to the reference structure (3) at least in the first direction (D1);
- a fifth complementary centring device (91) associated with the second sub-assembly (7), the second floating centring device (87) and the fifth complementary centring device (91) cooperating with one another to define the position of the second sub-assembly (7) relative to the first sub-assembly (5) only in the first direction (D1) and leaving the second sub-assembly (7) free relative to the first sub-assembly (5) in a second direction (D2);
- the floating centring device (21) and the third complementary centring device (27) cooperating with one another to define the position of the second sub-assembly (7) relative to the first sub-assembly (5) in the first direction (D1) and the second direction (D2).

8. Structure according to any one of the preceding claims, **characterised in that** at least one of the second and third complementary centring devices (23, 27) comprises at least a first rib (93) extending in a first plane perpendicular to the first direction (D1), and a second rib (95) extending wholly on one side of the first plane.

9. Method of assembling an internal structure according to any one of the preceding claims, the method comprises the following steps:
- centring the first sub-assembly (5) relative to the reference structure (3) at least in the first direction (D1) by means of the first centring device (17) and the first complementary centring device (19);
- positioning the floating centring device (21) relative to the reference structure (3) in at least the first direction (D1) by means of the second complementary centring device (23);
- centring the second sub-assembly (7) relative to the first sub-assembly (5) in at least the first direction (D1) by means of the third complementary centring device (27) and the floating centring device (21).

10. Method according to claim 9, **characterised in that** the method comprises, before the steps of centring the first sub-assembly (5), of positioning the floating centring device (21) and of centring the second sub-assembly (7), a step of centring an intermediate sub-assembly (9) by means of an intermediate centring device (29) associated with the reference structure (3) and a complementary intermediate centring device (31) associated with the intermediate sub-assembly (9), the intermediate centring device (29) and the complementary intermediate centring device (31) cooperating with one another to define the position of the intermediate sub-assembly (9) relative to the reference structure (3) in at least the first direction (D1).

11. Method according to claim 10, **characterised in that**:
- the method comprises, before the steps of centring the first sub-assembly (5), of positioning the floating centring device (21), of centring the second sub-assembly (7) and of centring the intermediate sub-assembly (9), a step of provisionally centring a lateral sub-assembly (11) by means of a secondary lateral centring device (33) associated with the reference structure (3) and a complementary secondary lateral centring device (35) associated with the lateral sub-assembly (11), the secondary lateral centring device (33) and the complementary secondary lateral centring device (35) cooperating with one another to define the position of the lateral sub-assembly (11) relative to the reference structure (3) in at least the first direction (D1) with a clearance,
- the method further comprising a step of final centring of the lateral sub-assembly (1) by means of a primary lateral centring device (37) associated with the lateral sub-assembly (11) and a complementary primary lateral centring device (39) associated with the intermediate sub-assembly (9), the primary lateral centring device (37) and the complementary primary lateral centring device (39) cooperating with one another to define the position of the lateral sub-assembly (11) relative to the intermediate sub-assembly (9) in at least the first direction (D1).

12. Method according to claim 10 or 11, **characterised in that**:
- the method comprises, before the steps of centring the first sub-assembly (5), of positioning the floating centring device (21), of centring the second sub-assembly (7), a step of provisionally centring another lateral sub-assembly (13) by means of another secondary lateral centring device (41) associated with the reference structure (3) and another complementary secondary lateral centring device (43) associated with the other lateral sub-assembly (13), the other secondary lateral centring device (41) and the other complementary secondary lateral centring device (43) cooperating with one another to define the position of the other lateral sub-assembly (13) relative to the reference structure (3) in at least the first direction (D1) with a clearance,
- the method further comprising a step of final centring of the other lateral sub-assembly (13) by means of another primary lateral centring device (45) associated with the other lateral sub-assembly (13) and another complementary primary lateral centring device (47) associated with the second sub-assembly (7), the other primary lateral centring device (45) and the other complementary primary lateral centring device (47) cooperating with one another to define the position of the other lateral sub-assembly (13) relative to the second sub-assembly (7) in at least the first direction (D1).
